(19) Europäisches Patentamt
European Patent Office
Office européen des brevets

(11) **EP 3 535 923 B1**

(12) **FASCICULE DE BREVET EUROPEEN**

(45) Date de publication et mention
de la délivrance du brevet:
**05.08.2020 Bulletin 2020/32**

(21) Numéro de dépôt: **17821701.4**

(22) Date de dépôt: **08.12.2017**

(51) Int Cl.:
**H04L 9/00** (2006.01)

(86) Numéro de dépôt international:
**PCT/FR2017/053479**

(87) Numéro de publication internationale:
**WO 2018/104686 (14.06.2018 Gazette 2018/24)**

(54) **MÉTHODE DE CLASSIFICATION SÉCURISÉE UTILISANT UNE OPÉRATION DE TRANSCHIFFREMENT**

**VERFAHREN ZUR SICHEREN KLASSIFIZIERUNG MITHILFE EINER VERSCHLÜSSELUNGSOPERATION**

**METHOD FOR SECURE CLASSIFICATION USING A TRANSCRYPTION OPERATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2016 FR 1662244**

(43) Date de publication de la demande:
**11.09.2019 Bulletin 2019/37**

(73) Titulaire: **Commissariat à l'énergie atomique et aux énergies alternatives 75015 Paris (FR)**

(72) Inventeurs:
• **CARPOV, Sergiu**
**91300 Massy (FR)**
• **SIRDEY, Renaud**
**78720 Cernay-la-Ville (FR)**
• **STAN, Oana**
**91300 Massy (FR)**

(74) Mandataire: **Brevalex
56, Boulevard de l'Embouchure
B.P. 27519
31075 Toulouse Cedex 2 (FR)**

(56) Documents cités:
**US-A1- 2012 201 378**

• **Dantala O Oyerinde ET AL: "A Homomorphic Encryption Approach to Implementing Two- Party Privacy Preserving Data Mining", International Journal of Innovative Science, Engineering & Technology Issue, 1 novembre 2016 (2016-11-01), page 4332, XP055402108, Extrait de l'Internet: URL:http://ijiset.com/vol3/v3s11/IJISET_V3 _I11_30.pdf**
• **B. Murugeshwari ET AL: "Preservation of Privacy for Multiparty Computation System with Homomorphic Encryption", International Journal of Emerging Technology and Advanced Engineering, 1 mars 2014 (2014-03-01), XP055402124, Extrait de l'Internet: URL:https://pdfs.semanticscholar.org/64e4/ 5209900fa772fcabe750d094c8d8128cc31e.pdf [extrait le 2017-08-29]**
• **JUSTIN BRICKELL ET AL: "Privacy-Preserving Classifier Learning", 23 février 2009 (2009-02-23), FINANCIAL CRYPTOGRAPHY AND DATA SECURITY, SPRINGER BERLIN HEIDELBERG, BERLIN, HEIDELBERG, PAGE(S) 128 - 147, XP019125852, ISBN: 978-3-642-03548-7 abrégé chapitre 5: "Privacy-Preserving Decision-Tree Learning"; pages 135-141**
• **ALHASSAN KHEDR ET AL: "SHIELD: Scalable Homomorphic Implementation of Encrypted Data-Classifiers", INTERNATIONAL ASSOCIATION FOR CRYPTOLOGIC RESEARCH,, vol. 20160428:235300, 29 avril 2016 (2016-04-29), pages 1-12, XP061020712,**

**Description**

**DOMAINE TECHNIQUE**

La présente invention concerne de manière générale le domaine du traitement sécurisé de données dans l'informatique en nuage (Cloud Computing).

**ÉTAT DE LA TECHNIQUE ANTÉRIEURE**

Il est de plus en plus fréquent de confier le traitement de données à des plateformes informatiques externes, situées sur le « Cloud », c'est-à-dire accessibles via Internet. Un utilisateur peut par exemple recourir à une plateforme informatique hébergée sur le Cloud pour effectuer une classification de certaines de ses données.

On entend par classification de données (ou classement ou encore discrimination de données) une fonction $f$ de $X$ vers $C$, appelée modèle de classification, qui à toute donnée $x$ de $X$ associe une classe $c$ de $C$. Alternativement, le modèle de classification peut être probabiliste et, dans ce cas, la fonction $f$ donne pour chaque classe $c$ de $C$, la probabilité que la donnée $x$ appartienne à la classe $c$.

Le modèle de classification est généralement construit à partir d'un ensemble, dit ensemble d'apprentissage, constitué par des couples $(x,c)$ de données initiales et de classes correspondantes. Par exemple, l'ensemble $X$ peut être constitué de $N$-uplets de paramètres médicaux et l'ensemble $Y$ par un doubleton $(c,\bar{c})$ où c est le diagnostic d'une pathologie et $\bar{c}$ l'absence de cette pathologie.

L'ensemble de données d'apprentissage est souvent très volumineux. Il résulte en pratique de la collecte de données auprès de plusieurs sources, appelées dans la suite fournisseurs de données. Les utilisateurs du service de classification, appelés dans la suite clients, ne disposent généralement que de faibles ressources en calcul et/ou en mémoire (c'est notamment le cas lorsque ces utilisateurs sont équipés de terminaux mobiles) et, pour cette raison, ne peuvent télécharger l'ensemble de ces données pour effectuer eux-mêmes l'opération de classification. Les clients doivent recourir à une plateforme informatique, chargée de l'établissement du modèle et de la classification des données. Ces données peuvent être par exemple des données médicales, des données de consommation d'énergie, des données financières, etc.

Toutefois, le recours à une plateforme informatique distante pose le problème de la confidentialité des données transmises et, ce, à deux titres. Tout d'abord, il convient de préserver la confidentialité de l'apprentissage, c'est-à-dire des données d'apprentissage collectées et agrégées auprès des fournisseurs (par exemple auprès d'hôpitaux, de fournisseurs d'énergie, de banques, de compagnies d'assurance, etc.) ainsi que des modèles de classification élaborés à partir de ces données (paramètres des modèles notamment). Dans ce cas, les données des fournisseurs et les paramètres du modèle doivent être maintenus confidentiels vis-à-vis de la plateforme et/ou des clients du service de classification. D'autre part, il faut préserver la confidentialité de la classification, c'est-à-dire des données du client destinées à faire l'objet de l'opération de classification, ainsi que du résultat de cette même classification. Ce peut être, par exemple, des antécédents médicaux, la consommation d'énergie du client pour une personne physique ou l'état financier ou le portefeuille de clientèle pour une entreprise.

Les méthodes de classification sécurisée (*privacy-preserving classification*) de données, c'est-à-dire les méthodes de classification préservant la confidentialité des données, ont fait l'objet de plusieurs publications récentes.

L'article de R. Bost et al. intitulé « Machine learning classification over encrypted data » publié dans Cryptology Eprint Archive, Report 1014/331, 2014, propose notamment une méthode de classification sécurisée fondée sur différents algorithmes possibles (classification par hyperplans, classification bayésienne naïve, classification par arbres de décision privés) pouvant opérer tant sur des données en clair que des données chiffrées. La classification sur données chiffrées fait appel à des cryptosystèmes tels que le cryptosystème à résiduosité quadratique de Goldwasser Micali, le cryptosystème de Pallier ainsi qu'un cryptosystème totalement homomorphe (FHE). Toutefois, cette méthode de classification sécurisée nécessite l'échange de nombreux messages entre les parties et conduit donc à un temps d'exécution relativement long.

L'article de T. Graepel et al. intitulé « ML confidential : machine learning on encrypted data » publié dans Cryptology Eprint Archive, Report 2012/323, 2012, décrit une méthode d'apprentissage automatique dans laquelle les phases d'apprentissage et de classification s'effectuent sur des données chiffrées par un chiffrement homomorphe plafonné ou LHE (Levelled Homomorphic Encryption). Différents algorithmes de classification sont envisagés tels qu'une classification par hyperplans ou LM (Linear Means) et une classification par discriminant linéaire de Fischer. Le chiffrement homomorphe des données est peu adapté à des terminaux de faibles ressources, les messages contenant les données chiffrées sont de grande taille et le temps d'exécution particulièrement long.

L'article de D. Oyerinde et al. intitulé "A Homomorphic Encryption Approach to Implementing Two-Party Privacy Preserving Data Mining" expose un procédé pour la préservation de la confidentialité dans une opération d'exploration de données à l'aide d'un système de chiffrement homomorphe.

L'article de B. Murugeshwari et R. Sujatha intitulé "Préservation of Privacy for Multiparty Computation System with Homomorphic Encryption" expose également un processus similaire.

Le document de publication de demande de brevet US 2012/0201378 A1 par Nabeel et al. expose un dispositif de classification employant le chiffrement homomorphe.

L'article de J. Brickell et V. Shmatikov intitulé "Privacy-Preserving Classifier Learning" expose un protocole efficace et respectueux de la confidentialité pour l'apprentissage automatisé basé sur les classificateurs.

L'article de A. Khedr et al. intitulé "SHIELD: Scalable Homomorphic Implementation of Encrypted Data-Classifiers" expose l'implémentation d'un classificateur de données chiffré de façon homomorphe.

Le problème à la base de l'invention est par conséquent de proposer une méthode de classification sécurisée de données par une plateforme informatique distante qui ne présente pas les inconvénients de l'art antérieur, en particulier qui ne nécessite pas l'envoi d'un grand nombre de messages voire l'envoi de longs messages à la plateforme et qui permette par conséquent d'obtenir un temps d'exécution sensiblement plus court que dans l'art antérieur.

**EXPOSÉ DE L'INVENTION**

La présente invention est définie par une méthode de classification sécurisée de données par une plateforme informatique, comprenant:

- une étape d'envoi de données à classifier, d'au moins un client à ladite plateforme informatique, les données étant envoyées sous forme chiffrée au moyen d'un chiffrement par flot utilisant une première clé symétrique, associée au client ;
- une étape d'envoi de paramètres d'un modèle de classification, d'au moins un fournisseur à ladite plateforme informatique, les paramètres étant envoyés sous forme chiffrée au moyen d'un chiffrement par flot utilisant une seconde clé symétrique, associée au fournisseur;
- une première étape de transchiffrement dans laquelle les données chiffrées par la première clé symétrique sont rechiffrées par la clé publique d'un cryptosystème homomorphe, les données ainsi rechiffrées étant déchiffrées dans le domaine homomorphe à partir de la première clé symétrique chiffrée par la clé publique du système homomorphe, pour obtenir lesdites données, chiffrées par ladite clé publique;
- une seconde étape de transchiffrement dans laquelle les paramètres chiffrés par la seconde clé symétrique sont rechiffrés par ladite clé publique puis déchiffrés dans le domaine homomorphe à partir de la seconde clé symétrique chiffrée par la clé publique du système homomorphe, pour obtenir lesdits paramètres, chiffrés par ladite clé publique ;
- une étape de classification des données au moyen d'une fonction de classification, ladite fonction de classification opérant sur les données et les paramètres chiffrés par la clé publique, ladite fonction de classification étant évaluée dans le domaine homomorphe pour fournir un résultat de classification chiffré par ladite clé publique.

Dans un premier mode de réalisation, préalablement à la première étape de transchiffrement, la première clé symétrique est chiffrée par le client au moyen de la clé publique puis transmise ainsi chiffrée à la plateforme informatique, la première étape de transchiffrement déchiffrant dans le domaine homomorphe les données rechiffrées, au moyen de la première clé symétrique chiffrée par la clé publique.

Préalablement à la première étape de transchiffrement, la clé publique est transmise par le client à la plateforme informatique et celle-ci transmet au client le résultat de classification chiffré par ladite clé publique, le client déchiffrant ce résultat au moyen de la clé privée dudit cryptosystème homomorphe pour obtenir un résultat de classification en clair.

Dans ce cas, préférablement, la clé publique est transmise par la plateforme informatique au fournisseur et, préalablement à la seconde étape de transchiffrement, la seconde clé symétrique est chiffrée par le fournisseur au moyen de ladite clé publique puis transmise ainsi chiffrée à la plateforme informatique, la seconde étape de transchiffrement déchiffrant dans le domaine homomorphe les paramètres rechiffrés, au moyen de la seconde clé symétrique chiffrée par la clé publique.

Selon un second mode de réalisation, préalablement à la première étape de transchiffrement, la clé publique est transmise par le fournisseur à la plateforme informatique et celle-ci transmet au fournisseur le résultat de classification chiffré par ladite clé publique, le fournisseur déchiffrant ce résultat au moyen de la clé privée dudit cryptosystème homomorphe pour obtenir un résultat de classification en clair.

Dans ce cas, préférablement, la clé publique est transmise par la plateforme informatique au client et, préalablement à la première étape de transchiffrement, la première clé symétrique est chiffrée par le client au moyen de ladite clé publique puis transmise ainsi chiffrée à la plateforme informatique, la première étape de transchiffrement déchiffrant dans le domaine homomorphe les données rechiffrés, au moyen de la première clé symétrique chiffrée par la clé publique.

Selon une premier modèle de classification, la fonction de classification est une fonction linéaire des données à classifier.

Selon un second exemple de modèle de classification, la fonction de classification est une fonction polynomiale des données à classifier.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1 représente schématiquement une méthode de classification sécurisée selon le principe général de l'invention ;
La Fig. 2 représente un ordinogramme de la méthode de classification sécurisée de la Fig.1 ;
La Fig. 3 représente schématiquement une méthode de classification sécurisée selon un premier mode de réalisation de l'invention ;
La Fig. 4 représente un ordinogramme de la méthode de classification sécurisée de la Fig. 3 ;
La Fig. 5 représente schématiquement une méthode de classification sécurisée selon un second mode de réalisation de l'invention ;

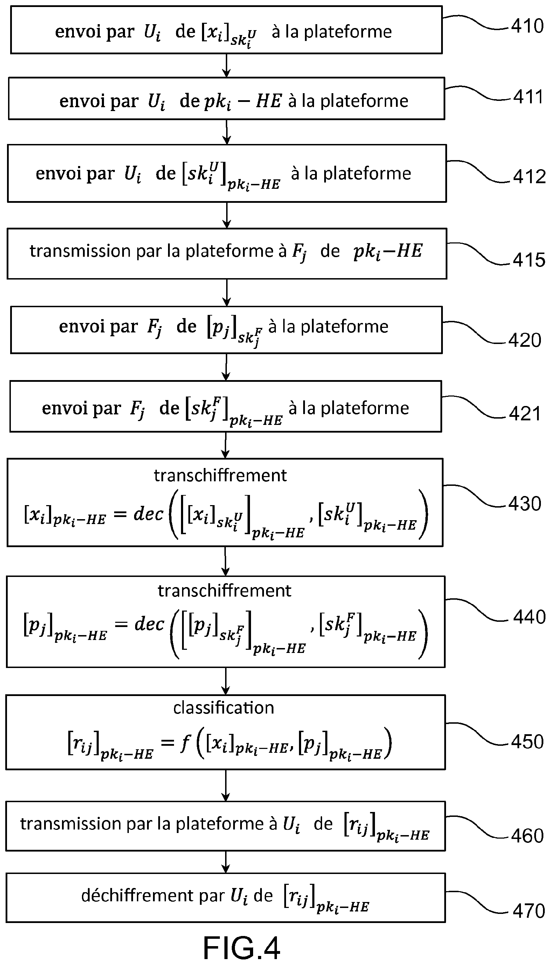

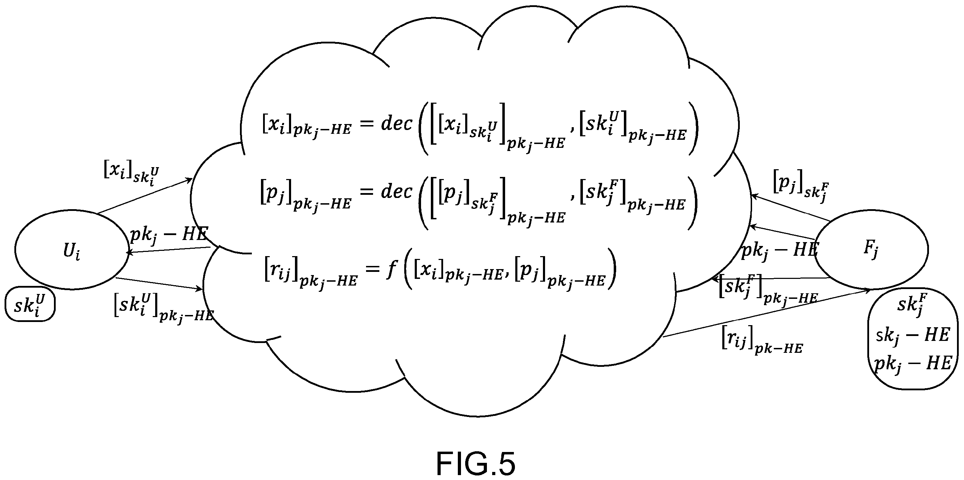

La Fig. 4 représente un ordinogramme de la méthode de classification sécurisée de la Fig. 5.

## EXPOSÉ DÉTAILLÉ DE MODES DE RÉALISATION PARTICULIERS

L'idée à la base de l'invention est de transmettre à la plateforme les données à classifier ainsi que les paramètres du modèle de classification en les chiffrant préalablement au moyen d'un chiffrement à clé symétrique, puis d'effectuer un transchiffrement de ces données et paramètres dans un domaine homomorphe pour enfin évaluer la fonction de classification dans le domaine homomorphe, le résultat de la classification étant fourni sous forme chiffrée par la clé publique du cryptosystème homomorphe. Ainsi, il n'est pas nécessaire de chiffrer par chiffrement homomorphe les données à classifier au niveau des clients et les paramètres du modèle de classification au niveau des fournisseurs. En outre, la totalité du processus d'évaluation se faisant dans le domaine homomorphe par la plateforme informatique, celle-ci ne peut accéder ni aux données en clair, ni aux paramètres en clair du modèle de classification, ni davantage au résultat de classification en clair.

La méthode de classification sécurisée utilise un cryptosystème homomorphe pour les étapes de transchiffrement et d'évaluation de la fonction de classification.

On rappelle qu'un chiffrement homomorphe permet d'effectuer des opérations (en pratique des opérations arithmétiques d'addition ou de multiplication) sur des données sans jamais les dévoiler. Plus précisément, un chiffrement homomorphe est un chiffrement à clé asymétrique $Enc_{pk}$ (de clé publique $pk$) vérifiant la propriété suivante :

$$Enc_{pk} : \Omega \rightarrow \Gamma$$

$$Dec_{sk}\left[ Enc_{pk}\left(a\right) \oplus Enc_{pk}\left(b\right)\right] = a+b \tag{1}$$

où $\Omega$ est l'espace des messages clairs (dit plus simplement espace des clairs) et $\Gamma$ est l'espace des messages chiffrés (dit plus simplement espace des chiffrés), + une opération additive dans l'espace des clairs conférant à $\Omega$ une structure de groupe, $\oplus$ une opération dans l'espace des chiffrés conférant à $\Gamma$ une structure de groupe. On comprend ainsi que l'application de $(\Omega,+)$ dans $(\Gamma,\oplus)$ est un homomorphisme de groupes. $Dec_{sk}$ est la fonction de déchiffrement correspondant à $Enc_{pk}$ (où $sk$ est la clé secrète de l'utilisateur).

Il résulte de l'expression (1) qu'il est possible d'effectuer une opération additive entre deux clairs ($a,b$) à partir d'une opération correspondante entre leurs chiffrés ($Enc_{pk}(a),Enc_{pk}(b)$).

Plus généralement, un chiffrement homomorphe peut être considéré comme un morphisme d'anneau entre l'espace des clairs (muni des opérations $+,\times$) et l'espace des chiffrés (muni des opérations correspondantes $\oplus$, $\otimes$). On a alors les propriétés suivantes :

$$Dec_{sk}\left(Enc_{pk}\left(a+b\right)\right) = Dec_{sk}\left(Enc_{pk}\left(a\right) \oplus Enc_{pk}\left(b\right)\right) = a+b \tag{2-1}$$

$$Dec_{sk}\left(Enc_{pk}\left(a\times b\right)\right) = Dec_{sk}\left(Enc_{pk}\left(a\right) \otimes Enc_{pk}\left(b\right)\right) = a\times b \tag{2-2}$$

A l'aide des expressions (2-1) et (2-2), il est donc possible d'évaluer une fonction $f$ quelconque, décomposable en opérations élémentaires d'addition et de multiplication, dans l'espace des chiffrés puis de déchiffrer le résultat.

Dans ces cryptosystèmes homomorphes actuels, le chiffrement consiste à masquer un message avec du bruit. Réciproquement, le déchiffrement consiste à retirer ce bruit, ce qui est faisable si l'on connaît la clef privée du cryptosystème mais en revanche extrêmement difficile si celle-ci est inconnue. Les opérations homomorphes maintiennent naturellement ce masquage voire l'amplifient. Si l'on représente la fonction $f$ précitée selon une décomposition arborescente, chaque nœud de l'arbre correspondant à une opération arithmétique élémentaire, un bruit est ajouté à chaque niveau de l'arbre. On conçoit donc que si la fonction $f$ présente une profondeur de calcul importante (c'est-à-dire un grand nombre de niveaux dans la représentation arborescente), le niveau de bruit dans le résultat d'évaluation de la fonction $f$ augmente. Lorsque le bruit dépasse un seuil (dépendant du schéma de chiffrement utilisé), il n'est plus garanti que le résultat soit encore déchiffrable. Lorsqu'un cryptosystème homomorphe permet d'effectuer n'importe quelle profondeur de calcul, il est dénommé entièrement homomorphe ou FHE (Fully Homomorphic Encryption). A défaut, il est dit relativement homomorphe ou SHE (Somewhat Homomorphic) voire LHE (Levelled Homomorphic). Dans la suite, nous supposerons que le cryptosystème homomorphe utilisé est entièrement homomorphe ou bien homomorphe jusqu'à une profondeur suffisante pour évaluer la fonction de classification. La clé privée et la clé publique d'un cryptosystème homomorphe seront conventionnellement notées $sk - HE$ et $pk - HE$.

Le transchiffrement est une technique cryptographique permettant de passer de données chiffrées par un premier cryptosystème aux mêmes données chiffrées par un second cryptosystème, sans passer par une étape intermédiaire de déchiffrement dans l'espace des clairs.

La présente méthode de classification sécurisée fait usage d'un transchiffrement permettant de passer d'un chiffrement par flot à un chiffrement homomorphe. On rappelle qu'un chiffrement par flot est un chiffrement à clé symétrique dans lequel le message à chiffrer est simplement additionné bit à bit avec la clé, notée ici simplement $sk$. Le déchiffrement est réalisé comme le chiffrement, par simple addition bit à bit de la donnée chiffrée avec la clé symétrique.

Si l'on note $x$ une donnée en clair, $[x]_{sk}$ la donnée chiffrée par le chiffrement par flot, $S$, et $[x]_{pk-HE}$ la même donnée chiffrée par le chiffrement homomorphe, $HE$, on a la relation :

$$S^{-1}\left(\left[[x]_{sk}\right]_{pk-HE}, [sk]_{pk-HE}\right) = [x]_{pk-HE} \qquad (3)$$

Autrement dit, il est possible de déchiffrer dans le domaine homomorphe (c'est-à-dire dans le domaine des chiffrés homomorphe) une donnée chiffrée une première fois par le chiffrement par flot et une seconde fois par le chiffrement homomorphe. Le déchiffrement par flot, $S^{-1}$ étant réalisé par une simple addition avec la clé symétrique, on comprend que celui-ci puisse être effectué dans le domaine homomorphe au moyen de la clé symétrique chiffrée $[sk]_{pk-HE}$.

Nous considérons dans la suite un ensemble de clients d'un service de classification, une plateforme informatique distante et un ensemble de fournisseurs de modèles de classification au sens défini précédemment. L'ensemble des clients est noté $U_1,...,U_N$ et l'ensemble des fournisseurs $F_1,...,F_M$, avec $N \geq 1$ et $M \geq 1$.

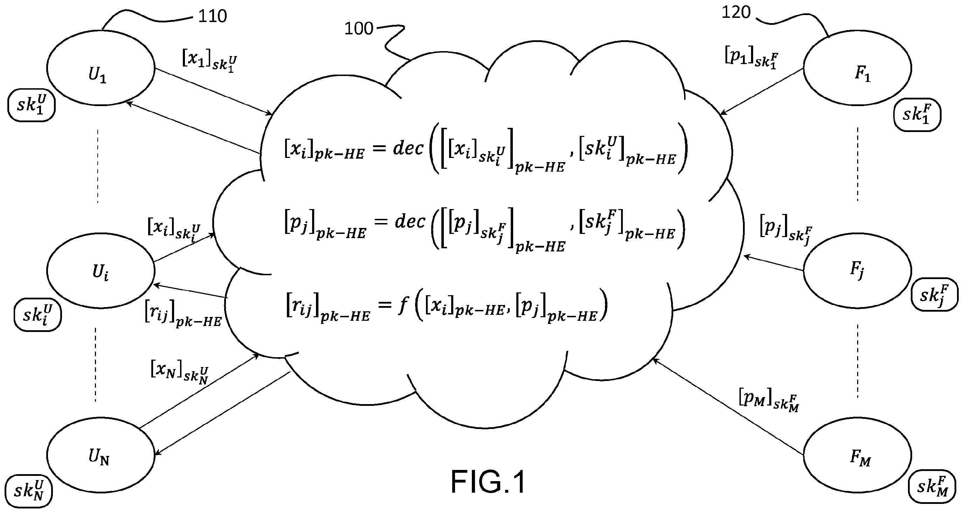

La Fig. 1 représente schématiquement une méthode de classification sécurisée selon le principe général de l'invention.

On a représenté en 100 la plateforme informatique, en 110 les clients du service de classification et en 120 les fournisseurs des modèles de classification.

La plateforme est considérée comme semi-honnête, c'est-à-dire qu'elle est fiable en termes de calculs effectués mais qu'elle ne l'est pas nécessairement en termes de confidentialité des données à classifier et des paramètres des modèles de classification.

Chaque client $U_i$, $i = 1,..., N$ possède une clé de chiffrement symétrique, notée $sk_i^U$ au moyen de laquelle il est capable d'effectuer un chiffrement par flot des données à classifier.

De manière similaire, chaque fournisseur $F_j$, $j = 1,..., M$, possède une clé symétrique $sk_j^F$ au moyen de laquelle il est capable d'effectuer un chiffrement par flot des paramètres de son modèle de classification.

Nous supposerons en outre que l'ensemble des clients, fournisseurs et la plateforme informatique partagent la clé publique, $pk - HE$ d'un cyptosystème homomorphe. Dans le mode de réalisation général, aucune hypothèse n'est faite sur la génération ou sur la distribution de cette clé publique, elle peut avoir été transmise par un client ou par un fournisseur comme nous verrons par la suite. Alternativement, elle peut avoir été transmise par un serveur de clés.

En revanche, seul le destinataire du résultat de classification possédant la clé privée, $sk - HE$, correspondant à la clé publique de ce cryptosystème, pourra y accéder.

Dans une première étape d'envoi, un client $U_i$ qui souhaite classifier ses données, $x_i$, les transmet sous forme chiffrée à la plateforme informatique. Les données à classifier se présentent généralement sous la forme d'un vecteur d'attributs de taille donnée. Le chiffrement est réalisé par flot au moyen d'une première clé symétrique $sk_i^U$, les données chiffrées étant notées $\left[x_i\right]_{sk_i^U}$. La première clé symétrique $sk_i^U$ n'est partagée ni avec la plateforme, ni généralement avec les fournisseurs et les autres clients.

De manière similaire, dans une seconde étape d'envoi, un fournisseur $F_j$ transmet les paramètres, $p_j$, de son modèle de classification sous forme chiffrée à la plateforme informatique. Le chiffrement est réalisé par flot au moyen d'une seconde clé symétrique, $sk_j^F$, associée au fournisseur $F_j$, les paramètres chiffrés étant notés $\left[p_j\right]_{sk_j^F}$. La clé symétrique $sk_j^F$ n'est partagée ni avec la plateforme et, généralement, ni avec les clients, ni avec les autres fournisseurs.

Il est important de remarquer que l'ordre des première et seconde étapes d'envoi est indifférent. En d'autres termes (et cela est souvent le cas), le fournisseur $F_j$ fournit d'abord son modèle de classification à la plateforme avant qu'un client ne transmette une requête de classification de données.

La plateforme informatique effectue ensuite une première et une seconde étape de transchiffrement, l'ordre de ces deux étapes étant également indifférent.

Lors d'une première étape de transchiffrement, la plateforme transforme les données chiffrées par la clé symétrique $sk_i^U$ en ces mêmes données, chiffrées par la clé publique *pk-HE*. Plus précisément, la plateforme informatique chiffre à nouveau les données chiffrées $\left[x_i\right]_{sk_i^U}$ au moyen de la clé publique *pk - HE,* soit $\left[\left[x_i\right]_{sk_i^U}\right]_{pk-HE}$ et déchiffre ensuite, dans le domaine homomorphe, ces données ainsi rechiffrées, à partir de la clé symétrique $sk_i^U$, ce qui peut s'exprimer par :

$$\left[x_i\right]_{pk-HE} = dec\left(\left[\left[x_i\right]_{sk_i^U}\right]_{pk-HE}, \left[sk_i^U\right]_{pk-HE}\right) \qquad (4)$$

où $dec(\gamma, \kappa)$ signifie l'opération de déchiffrement par flot (identique à l'opération de chiffrement par flot) du chiffré $\gamma$ au moyen de la clé $\kappa$. On comprendra que l'opération de déchiffrement est réalisée ici dans le domaine homomorphe, sans que la plateforme n'ait à aucun moment accès aux données en clair, $x_i$.

De manière similaire, dans une seconde étape de transchiffrement, la plateforme transforme les paramètres chiffrés par la clé symétrique $sk_j^F$ en ces mêmes paramètres chiffrés par la clé publique *pk - HE*. Plus précisément, la plateforme informatique chiffre à nouveau les paramètres déjà chiffrés $\left[p_j\right]_{sk_j^F}$ au moyen de la clé publique *pk-HE,* soit $\left[\left[p_j\right]_{sk_j^F}\right]_{pk-HE}$ et déchiffre ensuite, dans le domaine homomorphe, ces données ainsi rechiffrées, à partir de la clé symétrique $sk_j^F$, ce qui peut s'exprimer, avec les mêmes conventions de notation que précédemment, par :

$$\left[p_j\right]_{pk-HE} = dec\left(\left[\left[p_j\right]_{sk_j^F}\right]_{pk-HE}, \left[sk_j^F\right]_{pk-HE}\right) \qquad (5)$$

On comprendra également que l'opération de déchiffrement est réalisée ici dans le domaine homomorphe, sans que la plateforme n'ait à aucun moment accès aux paramètres en clair, $p_j$.

Enfin, la plateforme effectue une opération de classification à partir du modèle dont les paramètres ont été fournis par $F_j$. La fonction de classification *f* est évaluée dans le domaine homomorphe comme suit :

$$\left[r_{ij}\right]_{pk-HE} = f\left(\left[x_i\right]_{pk-HE}, \left[p_j\right]_{pk-HE}\right) \qquad (6)$$

Cette évaluation est possible dans la mesure où la fonction *f* est une fonction linéaire ou une fonction polynomiale, des données à classifier.

Comme exemple de fonction linéaire, on peut citer un classificateur par hyperplans.

Comme exemple de classification polynomiale (quadratique), on peut citer un classificateur gaussien.

Dans cet exemple, on suppose que les données sont représentées par des vecteurs d'attributs, $\mathbf{x}$ de dimension $Q$ et qu'à chaque classe $C_k$, $k = 1,..., K$ sont associées une valeur moyenne vectorielle $\mu_k$ (vecteur de dimension $Q$) ainsi qu'une matrice de covariance $\Sigma_k$, semi-définie positive de dimension $Q \times Q$. Le modèle est par conséquent défini par les paramètres $\mu_k$ et $\Sigma_k$ (ou $\Sigma_k^{-1}$) $k = 1,..., K$, collectivement représentés par le vecteur y.

La fonction de classification est alors donnée par :

$$r = f\left(\mathbf{x}, \mathbf{y}\right) = \arg\min_{k=1,...,K}\left(f\left(\mathbf{x}, C_k\right)\right) \qquad (7\text{-}1)$$

avec:

$$f\left(\mathbf{x}, C_k\right) = \left(\mathbf{x} - \mu_k\right)^T \Sigma_k^{-1} \left(\mathbf{x} - \mu_k\right) \qquad (7\text{-}2)$$

Autrement dit, la fonction de classification donne la classe pour laquelle la distance $\left(\mathbf{x} - \mu_k\right)^T \Sigma_k^{-1} \left(\mathbf{x} - \mu_k\right)$ au représentant $\mu_k$ est minimale.

La fonction $f(\mathbf{x}, C_k)$ dans (7-2) ne comportant que des opérations polynomiales (quadratiques), celle-ci peut être évaluée dans le domaine homomorphe. La comparaison des résultats $f(\mathbf{x}, C_k)$ dans (7-1) peut également être réalisée dans le domaine homomorphe au moyen d'expressions linéaires. L'évaluation de la comparaison des résultats peut s'effectuer au moyen de circuits booléens pour l'opérateur « > » (plus grand que) sur les représentations binaires des données chiffrées, comme décrit dans l'article de J. Garay et al. intitulé « Practical and secure solutions for integer comparison » publié dans T. Okamoto and X. Wang, editors, Public Key Cryptography - PKC 2007, volume 4450 of Lecture Notes in Computer Science, pages 330-342. Springer Berlin, Heidelberg, 2007.

Alternativement, il est possible d'utiliser une fonction de classification non linéaire et non polynomiale (par exemple classification par réseau neuronal) dans la mesure où une telle fonction peut être approximée localement par une fonction polynomiale (série de Taylor par exemple). On pourra trouver un exemple de classification sécurisée par réseau neuronal dans l'article de N. Dowlin et al. intitulé « CryptoNets : applying neural networks to encrypted data with high throughput and accuracy », available at research.microsoft.com/apps/pubs/default.aspx?id.

En tout état de cause, le résultat de la classification est obtenu en (6) sous forme chiffrée par la clé publique du cryptosystème homomorphe. Il peut alors être déchiffré par l'entité (client ou fournisseur par exemple) détentrice de la clé secrète correspondante.

Nous envisagerons plus loin un premier mode de réalisation dans lequel le résultat de la classification est transmis au client ayant formé la requête et un second mode de réalisation dans lequel ce résultat est transmis au fournisseur dont le modèle a servi à cette classification.

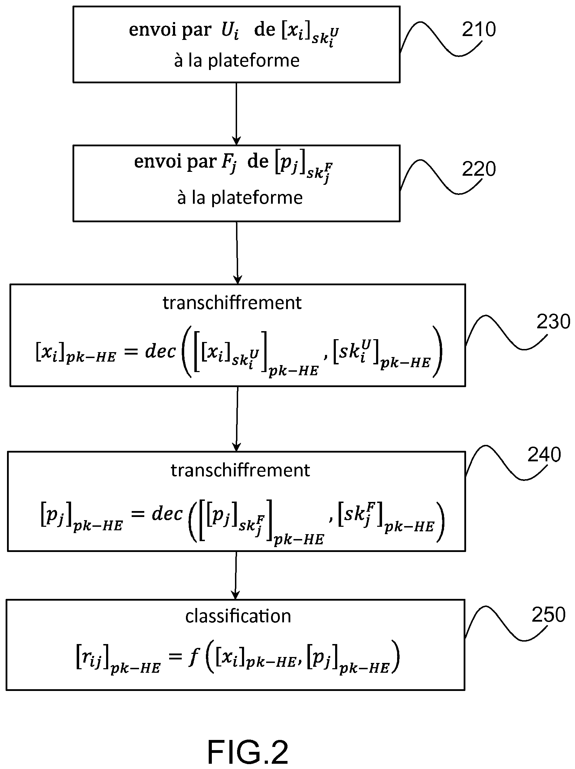

La Fig. 2 représente un ordinogramme de la méthode de classification sécurisée de la Fig.1.

Dans une première étape d'envoi, 210, un client $U_i$ qui souhaite classifier ses données, $x_i$, les transmet sous forme chiffrée, à savoir $\left[x_i\right]_{sk_i^U}$, à la plateforme informatique.

Dans une seconde étape d'envoi, 220, un fournisseur $F_j$ transmet les paramètres, $p_j$, de son modèle sous forme chiffrée, à savoir $\left[p_j\right]_{sk_j^F}$ à la plateforme informatique.

Dans une première étape de transchiffrement, 230, la plateforme informatique, chiffre une seconde fois les données déjà chiffrées $\left[x_i\right]_{sk_i^U}$, au moyen de la clé publique *pk - HE*, soit $\left[\left[x_i\right]_{sk_i^U}\right]_{pk-HE}$ et déchiffre ensuite, dans le domaine homomorphe, ces données ainsi rechiffrées, soit $[x_i]_{pk-HE} = dec\left(\left[[x_i]_{sk_i^U}\right]_{pk-HE}, \left[sk_i^U\right]_{pk-HE}\right)$.

Dans une seconde étape de transchiffrement, 240, la plateforme informatique, chiffre une seconde fois les paramètres chiffrés $[p_j]_{sk_j^F}$ au moyen de la clé publique *pk-HE,* soit $\left[[p_j]_{sk_j^F}\right]_{pk-HE}$ et déchiffre ensuite, dans le domaine homomorphe, ces paramètres ainsi rechiffrés, soit $[p_j]_{pk-HE} = dec\left(\left[[p_j]_{sk_j^F}\right]_{pk-HE}, \left[sk_j^F\right]_{pk-HE}\right)$.

Enfin dans une étape de classification des données, 250, la plateforme informatique effectue une opération de classification en évaluant la fonction de classification *f* dans le domaine homomorphe soit $[r_{ij}]_{pk\text{-}HE} = f([x_i]_{pk\text{-}HE}, [p_j]_{pk\text{-}HE})$.

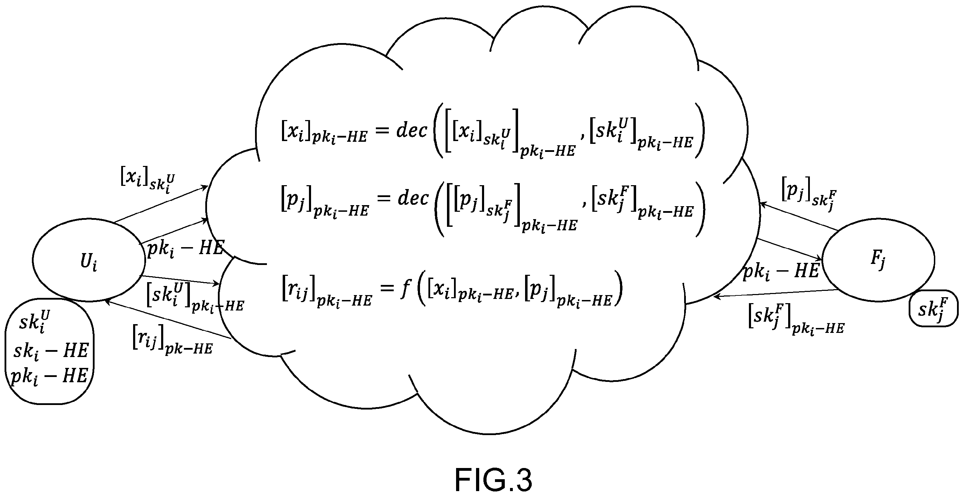

La Fig. 3 représente schématiquement une méthode de classification sécurisée selon un premier mode de réalisation de l'invention.

Dans ce mode de réalisation, le déchiffrement du résultat de la classification est réalisé par le client en ayant fait la demande. Pour ce faire, le client envoie à la plateforme sa clé publique homomorphe et déchiffre le résultat de la classification avec sa clé privée correspondante.

Pour des raisons de simplification de la présentation, seuls le client $U_i$ et le fournisseur de modèle $F_j$ concernés ont été représentés sur la figure. Il est clair cependant pour l'homme du métier qu'en règle générale plusieurs (*M*) fournisseurs peuvent fournir différents modèles de classification à la plateforme.

On note respectivement $sk_i$ - *HE* et $pk_i$ - *HE,* une clé privée et une clé publique d'un cryptosystème homomorphe. Ce couple de clés est par exemple généré localement par le client $U_i$. Ce dernier peut avoir aussi obtenu un certificat de clé publique auprès d'une autorité de certification.

Dans ce mode de réalisation, le client $U_i$ transmet à la plateforme informatique, préalablement à la première étape de transchiffrement, la clé publique $pk_i$ - *HE,* ses données à classifier sous forme chiffrée par la première clé symétrique, soit $[x_i]_{sk_i^U}$, ainsi que la première clé symétrique chiffrée par la clé publique, soit $\left[sk_i^U\right]_{pk_i-HE}$.

En parallèle, la plateforme reçoit du fournisseur $F_j$ les paramètres du modèle sous forme chiffrée par la seconde clé symétrique, soit $[p_j]_{sk_j^F}$.

La plateforme transmet la clé publique $pk_i$ - *HE* (reçue du client $U_i$) au fournisseur $F_j$. Celui-ci retourne ensuite à la plateforme la seconde clé symétrique chiffrée par la clé publique, soit $\left[sk_j^F\right]_{pk_i-HE}$. Cette clé publique est transmise à la plateforme avant la seconde étape de transchiffrement.

Dans la première étape de transchiffrement, la plateforme informatique, chiffre à nouveau les données chiffrées $[x_i]_{sk_i^U}$, au moyen de la clé publique $pk_i$ - *HE* qu'il a reçue de $U_i$, puis effectue l'opération de déchiffrement de ces données rechiffrées dans le domaine homomorphe au moyen de la première clé symétrique chiffrée par la clé publique, soit $\left[sk_i^U\right]_{pk_i-HE}$, qu'il a également reçue de $U_i$ :

$$[x_i]_{pk_i-HE} = dec\left(\left[[x_i]_{sk_i^U}\right]_{pk_i-HE}, \left[sk_i^U\right]_{pk_i-HE}\right) \qquad (8)$$

Dans la seconde étape de transchiffrement, la plateforme informatique chiffre à nouveau les paramètres chiffrés $[p_j]_{sk_j^F}$, au moyen de la clé publique $pk_i$ - *HE* qu'il a reçue de $U_i$, puis effectue l'opération de déchiffrement de ces données rechiffrées, soit $\left[[p_j]_{sk_j^F}\right]_{pk_i-HE}$, dans le domaine homomorphe, au moyen de la seconde clé symétrique chiffrée par la clé publique, $\left[sk_j^F\right]_{pk_i-HE}$, qu'il a préalablement reçue de $F_j$ :

$$\left[ p_j \right]_{pk_i-HE} = dec\left( \left[ \left[ p_j \right]_{sk_j^F} \right]_{pk_i-HE}, \left[ sk_j^F \right]_{pk_i-HE} \right) \tag{9}$$

Dans l'étape de classification, la plateforme évalue la fonction de classification comme précédemment, c'est-à-dire :

$$\left[ r_{ij} \right]_{pk_i-HE} = f\left( \left[ x_i \right]_{pk_i-HE}, \left[ p_j \right]_{pk_i-HE} \right) \tag{10}$$

Ce résultat de classification est ensuite transmis au client $U_i$ à l'origine de la requête. Celui-ci déchiffre le résultat à l'aide de sa clé privée homomorphe $sk_i$ - $HE$ pour obtenir le résultat de classification en clair $r_{ij}$. Ce résultat est relatif à la classification des données du client $U_i$ par le modèle du fournisseur $F_j$.

Selon une variante, la paire de clés privée et publique du cryptosystème homomorphe est toujours générée localement par le client $U_i$ mais la clé publique est distribuée par un serveur de clés, distinct de $U_i$, à la plateforme et au fournisseur $F_j$, voire à l'ensemble des fournisseurs $F_j$, $j = 1,..., M$.

Ce premier mode de réalisation peut être illustré par un cas d'usage dans lequel des hôpitaux (fournisseurs) mutualisent sur une plateforme leurs modèles pour un risque de cancer d'un organe, avec pour résultat de classification deux classes possibles: bénigne et maligne. Les clients sont des praticiens qui entrent les données médicales de leurs patients pour confirmer ou infirmer le risque de cancer. D'une part, les hôpitaux souhaitent protéger la confidentialité des modèles envoyés à la plateforme et, d'autre part, les médecins souhaitent protéger la confidentialité des données de leurs patients.

La Fig. 4 représente un ordinogramme de la méthode de classification sécurisée de la Fig. 3.

Cette méthode comprend tout d'abord des premières étapes d'envoi 410, 411, 412 du client à la plateforme informatique.

Plus précisément, en 410, le client $U_i$ transmet à la plateforme les données à classifier, chiffrées au moyen de sa clé symétrique $sk_i^U$, soit $\left[ x_i \right]_{sk_i^U}$.

En 411, le client $U_i$ transmet à la plateforme la clé publique $pk_i$ - $HE$ d'un cryptosystème homomorphe. Le couple de clé privée, clé publique de ce cryptosystème a été préalablement généré par le client en question. La clé privée, $sk_i$ - $HE$, et la clé publique correspondante, $pk_i$ - $HE$, ainsi générées sont ainsi associées à ce client. Le cas, échéant la clé publique $pk_i$ - $HE$ peut être transmise à la plateforme par un serveur de clés.

En 412, le client $U_i$ transmet à la plateforme sa clé symétrique $sk_i^U$, chiffrée par la clé publique $pk_i$ - $HE$.

On notera que l'ordre des étapes 410-412 est ici sans importance.

En 415, la plateforme informatique transmet au fournisseur $F_j$ (voire à l'ensemble des fournisseurs) la clé publique $pk_i$ - $HE$. Le cas échéant, cette clé publique peut être transmise directement par le client lui-même, voire être transmise par un serveur de clés.

Les étapes 420-421 sont des étapes d'envoi du fournisseur $F_j$ à la plateforme informatique.

Ainsi, en 420, le fournisseur $F_j$ transmet à la plateforme informatique les paramètres $p_j$ de son modèle, sous forme chiffrée, à savoir $\left[ p_j \right]_{sk_j^F}$.

En 421, le fournisseur $F_j$, ayant préalablement reçu la clé publique homomorphe $pk_i$ - $HE$ en 415, chiffre sa propre clé symétrique à l'aide de cette dernière et transmet le résultat chiffré, $\left[ sk_j^F \right]_{pk_i-HE}$, à la plateforme.

On notera que l'étape 420 peut intervenir dans n'importe quel ordre dans la séquence précédente, seule l'étape 421 devant intervenir après l'étape 415.

Dans une première étape de transchiffrement, 430, la plateforme informatique chiffre à nouveau les données chiffrées $\left[ x_i \right]_{sk_i^U}$, au moyen de la clé publique, $pk_i$ - $HE$ puis effectue un déchiffrement de ces données ainsi rechiffrées

$$\left[ x_i \right]_{pk_i-HE} = dec\left( \left[ \left[ x_i \right]_{sk_i^U} \right]_{pk_i-HE}, \left[ sk_i^U \right]_{pk_i-HE} \right).$$

dans le domaine homomorphe, soit

Dans une seconde étape de transchiffrement, 440, la plateforme informatique chiffre à nouveau les paramètres chiffrés $\left[p_j\right]_{sk_j^F}$, au moyen de la clé publique $pk_i$ - HE, puis effectue un déchiffrement de ces paramètres ainsi rechiffrés, soit $\left[\left[p_j\right]_{sk_j^F}\right]_{pk_i-HE}$, dans le domaine homomorphe : $\left[p_j\right]_{pk_i-HE} = dec\left(\left[\left[p_j\right]_{sk_j^F}\right]_{pk_i-HE}, \left[sk_j^F\right]_{pk_i-HE}\right)$.

L'ordre des étapes 430 et 440 est là encore indifférent. Toutefois, l'étape 430 devra être effectuée après les étapes 410-412. De manière similaire, l'étape 440 devra être effectuée après les étapes 420-421.

Ensuite, dans une étape de classification des données, 450, la plateforme informatique évalue la fonction de classification dans le domaine homomorphe, soit $\left[r_{ij}\right]_{pk_i-HE} = f\left(\left[x_i\right]_{pk_i-HE}, \left[p_j\right]_{pk_i-HE}\right)$.

Enfin, en 460, la plateforme informatique transmet au client $U_i$ le résultat de la classification (chiffré par la clé publique $pk_i$ - HE), $[r_{ij}]_{pk_i-HE}$

En 470, le client $U_i$, disposant de la clé privée correspondante $sk_i$ - HE, déchiffre le résultat de classification chiffré $[r_{ij}]_{pk_i-HE}$ pour obtenir le résultat de classification en clair, $r_{ij}$.

On notera que le résultat de classification $[r_{ij}]_{pk_i-HE}$ ne peut ainsi pas être déchiffré par les autres clients.

La Fig. 5 représente schématiquement une méthode de classification sécurisée selon un second mode de réalisation de l'invention.

Dans ce mode de réalisation, le déchiffrement du résultat de la classification est réalisé par le fournisseur ayant fourni le modèle de classification.

Pour ce faire, le fournisseur envoie à la plateforme sa clé publique homomorphe et déchiffre le résultat de la classification avec sa clé privée correspondante.

Comme dans le premier mode de réalisation, seuls le client $U_i$ et le fournisseur de modèle $F_j$ concernés ont été représentés sur la figure. Il est toutefois clair que plusieurs clients et plusieurs fournisseurs peuvent se connecter à la plateforme.

On note respectivement $sk_j$ - HE et $pk_j$ - HE, une clé privée et une clé publique d'un cryptosystème homomorphe. Ce couple de clés est par exemple généré localement par le fournisseur $F_j$. Ce dernier peut avoir aussi obtenu un certificat de clé publique auprès d'une autorité de certification.

Par ailleurs, le client $U_i$ dispose comme précédemment d'une première clé symétrique $sk_i^U$ et le fournisseur d'une seconde clé symétrique $sk_j^F$, pour effectuer un chiffrement par flot.

Le fournisseur $F_j$ transmet à la plateforme informatique, préalablement à la première étape de transchiffrement, la clé publique $pk_j$ - HE, les paramètres de modèle sous forme chiffrée par la seconde clé symétrique, soit $\left[p_j\right]_{sk_j^F}$, ainsi que la seconde clé symétrique chiffrée par la clé publique, soit $\left[sk_j^F\right]_{pk_j-HE}$.

En parallèle, la plateforme reçoit du client $U_i$ les données à classifier sous forme chiffrée par la première clé symétrique, soit $\left[x_i\right]_{sk_i^U}$.

La plateforme transmet la clé publique $pk_j$-HE préalablement reçue du fournisseur $F_j$ au client $U_i$. Ce dernier retourne alors à la plateforme la première clé symétrique chiffrée par la clé publique, soit $\left[sk_i^U\right]_{pk_j-HE}$.

Dans une première étape de transchiffrement, la plateforme informatique, chiffre à nouveau les données déjà chiffrées $\left[x_i\right]_{sk_i^U}$, au moyen de la clé publique $pk_j$ - HE qu'il a reçue de $F_j$, puis effectue l'opération de déchiffrement de ces données rechiffrées dans le domaine homomorphe au moyen de la première clé symétrique chiffrée par la clé publique, soit $\left[sk_i^U\right]_{pk_j-HE}$, qu'il a préalablement reçue de $U_i$ :

$$\left[x_i\right]_{pk_j-HE} = dec\left(\left[\left[x_i\right]_{sk_i^U}\right]_{pk_j-HE}, \left[sk_i^U\right]_{pk_j-HE}\right) \qquad (11)$$

Dans la seconde étape de transchiffrement, la plateforme informatique chiffre à nouveau les paramètres chiffrés $\left[ p_j \right]_{sk_j^F}$, au moyen de la clé publique $pk_j$ - $HE$ qu'il a reçue de $F_j$, puis effectue l'opération de déchiffrement de ces données rechiffrées, soit $\left[ \left[ p_j \right]_{sk_j^F} \right]_{pk_j-HE}$, dans le domaine homomorphe au moyen de la seconde clé symétrique chiffrée par la clé publique, $\left[ sk_j^F \right]_{pk_j-HE}$, qu'il a préalablement reçue de $F_j$ :

$$\left[ p_j \right]_{pk_j-HE} = dec\left( \left[ \left[ p_j \right]_{sk_j^F} \right]_{pk_j-HE}, \left[ sk_j^F \right]_{pk_j-HE} \right) \qquad (12)$$

Dans l'étape de classification, la plateforme évalue la fonction de classification comme précédemment, c'est-à-dire :

$$\left[ r_{ij} \right]_{pk_j-HE} = f\left( \left[ x_i \right]_{pk_j-HE}, \left[ p_j \right]_{pk_j-HE} \right) \qquad (13)$$

Ce résultat de classification est ensuite transmis au fournisseur qui peut déchiffrer le résultat à l'aide de sa clé privée $sk_j$ - $HE$.

Selon une variante, la paire de clés privée et publique du cryptosystème homomorphe est générée localement par le fournisseur $F_j$ mais la clé publique est distribuée par un serveur de clés, distinct de $F_j$, à la plateforme et au client $U_i$, voire à l'ensemble des clients $U_i$, $i=1,...,N$.

Ce second mode de réalisation peut être illustré par un cas d'usage dans lequel le gestionnaire d'un éco-quartier (fournisseur) souhaite connaître les profils de consommation énergétique des habitations (clients) dont il assure la gestion. Les différentes habitations remontent, de manière sécurisée, à la plateforme les données relatives à leur consommation énergétique. Le gestionnaire obtient, après classification sécurisée, les classes énergétiques de ses clients sans pouvoir accéder à leurs données en clair.

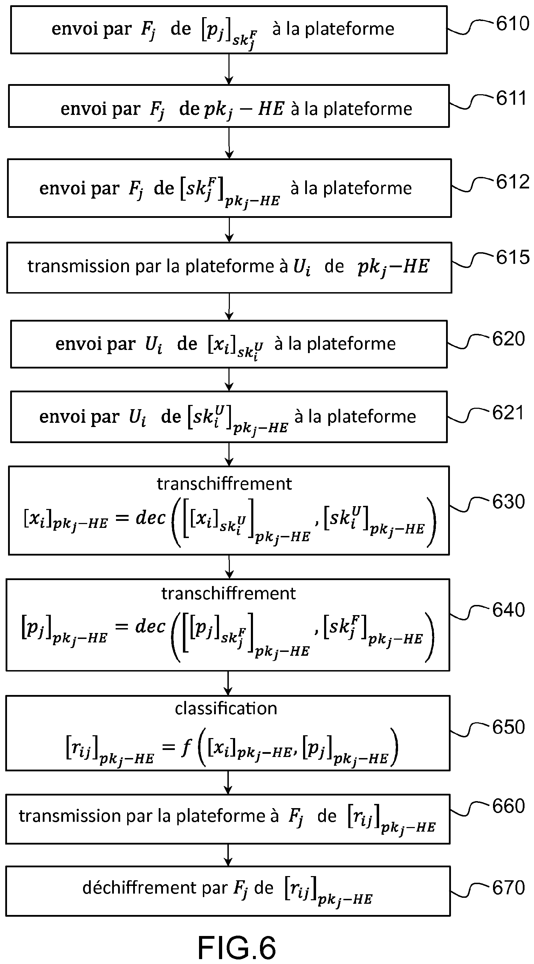

La Fig. 6 représente un ordinogramme de la méthode de classification sécurisée de la Fig. 5.

Cette méthode comprend tout d'abord des premières étapes d'envoi 610, 611, 612 du fournisseur à la plateforme informatique.

Plus précisément, en 610, le fournisseur $F_j$ transmet à la plateforme informatique les paramètres $p_j$ de son modèle, sous forme chiffrée, à savoir $\left[ p_j \right]_{sk_j^F}$.

En 611, le fournisseur $F_j$ transmet à la plateforme la clé publique d'un cryptosystème homomorphe. Le couple de clé privée, clé publique de ce cryptosystème a été préalablement généré par le fournisseur. La clé privée, $sk_j$ - $HE$, et la clé publique correspondante, $pk_j$ - $HE$, ainsi générées sont associées à ce fournisseur. Le cas, échéant la clé publique $pk_j$ - $HE$ peut être transmise à la plateforme par un serveur de clés.

En 612, le fournisseur $F_j$ transmet à la plateforme sa clé symétrique $sk_j^F$, chiffrée par la clé publique $pk_j$ - $HE$.

On notera que l'ordre des étapes 610-612 est sans importance.

En 615, la plateforme informatique transmet au client $U_i$ (voire à l'ensemble des clients) la clé publique $pk_j$ - $HE$. Le cas échéant, cette clé publique peut être transmise directement par le fournisseur lui-même, voire être transmise par un serveur de clés.

Les étapes 620-621 sont des étapes d'envoi du client $U_i$ à la plateforme informatique.

Ainsi, en 620, le client $U_i$ transmet à la plateforme informatique les données à classifier, sous forme chiffrée, à savoir $\left[ x_i \right]_{sk_i^U}$.

En 621, le client $U_i$, ayant préalablement reçu la clé publique homomorphe $pk_j$ - $HE$ en 615, chiffre sa clé symétrique à l'aide de cette dernière et transmet le résultat chiffré, $\left[ sk_i^U \right]_{pk_j-HE}$, à la plateforme.

On notera que l'étape 620 peut intervenir dans n'importe quel ordre dans la séquence précédente, seule l'étape 621 devant intervenir après l'étape 615.

Dans une première étape de transchiffrement, 630, la plateforme informatique chiffre à nouveau les données chiffrées $\left[x_i\right]_{sk_i^U}$, au moyen de la clé publique, $pk_j$ - $HE$ puis effectue un déchiffrement de ces données ainsi rechiffrées dans le domaine homomorphe, soit

$$\left[x_i\right]_{pk_j-HE} = dec\left(\left[\left[x_i\right]_{sk_i^U}\right]_{pk_j-HE}, \left[sk_i^U\right]_{pk_j-HE}\right).$$

Dans une seconde étape de transchiffrement, 640, la plateforme informatique chiffre à nouveau les paramètres chiffrés $\left[p_j\right]_{sk_j^F}$, au moyen de la clé publique $pk_j$ - $HE$, puis effectue un déchiffrement de ces paramètres ainsi rechiffrés, soit $\left[\left[p_j\right]_{sk_j^F}\right]_{pk_j-HE}$, dans le domaine homomorphe soit

$$\left[p_j\right]_{pk_j-HE} = dec\left(\left[\left[p_j\right]_{sk_j^F}\right]_{pk_j-HE}, \left[sk_j^F\right]_{pk_j-HE}\right).$$

L'ordre des étapes 630 et 640 est là encore indifférent. Toutefois, l'étape 640 devra être effectuée après les étapes 610-612. De manière similaire, l'étape 630 devra être effectuée après les étapes 620-621.

Ensuite, dans une étape de classification des données, 650, la plateforme informatique évalue la fonction de classification dans le domaine homomorphe, soit $\left[r_{ij}\right]_{pk_j-HE} = f\left(\left[x_i\right]_{pk_j-HE}, \left[p_j\right]_{pk_j-HE}\right).$

Enfin, en 660, la plateforme informatique transmet au fournisseur $F_j$ le résultat de la classification (chiffré par la clé publique $pk_j$ - $HE$), $[r_{ij}]_{pkj-HE}$

En 670, le fournisseur $F_j$, disposant de la clé privée correspondante, $sk_j$ - $HE$, déchiffre le résultat de classification chiffré $[r_{ij}]_{pkj-HE}$ pour obtenir le résultat de classification en clair, $r_{ij}$.

On notera que le résultat de classification $[r_{ij}]_{pkj-HE}$ ne pourra notamment pas être déchiffré par les autres fournisseurs.

On a supposé dans ce qui précède que les fournisseurs envoyaient les paramètres de leurs modèles de classification à la plateforme. Alternativement, on pourra envisager que les fournisseurs transmettent des données d'apprentissage, la construction du modèle de classification étant alors réalisée par la plateforme dans le domaine homomorphe.

**Revendications**

1. Méthode de classification sécurisée de données par une plateforme informatique **caractérisée en ce qu'**elle comprend :

   - une étape d'envoi (210) de données à classifier, d'au moins un client à ladite plateforme informatique, les données étant envoyées sous forme chiffrée au moyen d'un chiffrement par flot utilisant une première clé symétrique, associée au client ;
   - une étape d'envoi (220) de paramètres d'un modèle de classification, d'au moins un fournisseur à ladite plateforme informatique, les paramètres étant envoyés sous forme chiffrée au moyen d'un chiffrement par flot utilisant une seconde clé symétrique, associée au fournisseur;
   - une première étape de transchiffrement (230) dans laquelle les données chiffrées par la première clé symétrique sont rechiffrées par la clé publique d'un cryptosystème homomorphe, les données ainsi rechiffrées étant déchiffrées dans le domaine homomorphe à partir de la première clé symétrique chiffrée par la clé publique du cryptosystème homomorphe, pour obtenir lesdites données, chiffrées par ladite clé publique;
   - une seconde étape de transchiffrement (240) dans laquelle les paramètres chiffrés par la seconde clé symétrique sont rechiffrés par ladite clé publique puis déchiffrés dans le domaine homomorphe à partir de la seconde clé symétrique chiffrée par la clé publique du cryptosystème homomorphe, pour obtenir lesdits paramètres, chiffrés par ladite clé publique ;
   - une étape de classification des données (250) au moyen d'une fonction de classification, ladite fonction de classification opérant sur les données et les paramètres chiffrés par la clé publique, ladite fonction de classification étant évaluée dans le domaine homomorphe pour fournir un résultat de classification chiffré par ladite clé publique.

2. Méthode de classification sécurisée selon la revendication 1, **caractérisée en ce que**, préalablement à la première étape de transchiffrement, la première clé symétrique est chiffrée par le client au moyen de la clé publique puis transmise ainsi chiffrée à la plateforme informatique, la première étape de transchiffrement déchiffrant dans le domaine homomorphe les données rechiffrées, au moyen de la première clé symétrique chiffrée par la clé publique.

3. Méthode de classification selon la revendication 1 ou 2, **caractérisée en ce que**, préalablement à la première étape de transchiffrement, la clé publique est transmise par le client à la plateforme informatique et que celle-ci transmet au client le résultat de classification chiffré par ladite clé publique, le client déchiffrant ce résultat au moyen de la clé privée dudit cryptosystème homomorphe pour obtenir un résultat de classification en clair.

4. Méthode de classification sécurisée selon la revendication 3, **caractérisée en ce que** la clé publique est transmise par la plateforme informatique au fournisseur et que, préalablement à la seconde étape de transchiffrement, la seconde clé symétrique est chiffrée par le fournisseur au moyen de ladite clé publique puis transmise ainsi chiffrée à la plateforme informatique, la seconde étape de transchiffrement déchiffrant dans le domaine homomorphe les paramètres rechiffrés, au moyen de la seconde clé symétrique chiffrée par la clé publique.

5. Méthode de classification selon la revendication 1 ou 2, **caractérisée en ce que**, préalablement à la première étape de transchiffrement, la clé publique est transmise par le fournisseur à la plateforme informatique et que celle-ci transmet au fournisseur le résultat de classification chiffré par ladite clé publique, le fournisseur déchiffrant ce résultat au moyen de la clé privée dudit cryptosystème homomorphe pour obtenir un résultat de classification en clair.

6. Méthode de classification selon la revendication 5, **caractérisée en ce que** la clé publique est transmise par la plateforme informatique au client et que, préalablement à la première étape de transchiffrement, la première clé symétrique est chiffrée par le client au moyen de ladite clé publique puis transmise ainsi chiffrée à la plateforme informatique, la première étape de transchiffrement déchiffrant dans le domaine homomorphe les données rechiffrés, au moyen de la première clé symétrique chiffrée par la clé publique.

7. Méthode de classification selon l'une des revendications précédentes, **caractérisée en ce que** la fonction de classification est une fonction linéaire des données à classifier.

8. Méthode de classification selon l'une des revendications 1 à 6, **caractérisée en ce que** la fonction de classification est une fonction polynomiale des données à classifier.

**Patentansprüche**

1. Verfahren zur sicheren Klassifizierung von Daten durch eine Computerplattform, **dadurch gekennzeichnet, dass** es umfasst:

- einen Schritt des Sendens (210) von zu klassifizierenden Daten von zumindest einem Client an die genannte Computerplattform, wobei die Daten in verschlüsselter Form mittels Stream-Verschlüsselung unter Verwendung eines ersten, dem Client zugeordneten symmetrischen Schlüssels gesendet werden;
- einen Schritt des Sendens (220) von Parametern eines Klassifizierungsmodells von zumindest einem Anbieter an die Computerplattform, wobei die Parameter in verschlüsselter Form mittels Stream-Verschlüsselung unter Verwendung eines zweiten, dem Anbieter zugeordneten symmetrischen Schlüssels gesendet werden;
- einen ersten Schritt der Transverschlüsselung (230), wobei die durch den ersten symmetrischen Schlüssel verschlüsselten Daten durch den öffentlichen Schlüssel eines homomorphen Kryptosystems wieder verschlüsselt werden, wobei die so wieder verschlüsselten Daten in dem homomorphen Bereich aus dem ersten symmetrischen Schlüssel, der durch den öffentlichen Schlüssel des homomorphen Kryptosystems verschlüsselt wurde, entschlüsselt werden, um die Daten zu erhalten, die durch den öffentlichen Schlüssel verschlüsselt wurden;
- einen zweiten Schritt der Transverschlüsselung (240), wobei die durch den zweiten symmetrischen Schlüssel verschlüsselten Parameter durch den öffentlichen Schlüssel wieder verschlüsselt werden und dann in dem homomorphen Bereich aus dem zweiten symmetrischen Schlüssel, der durch den öffentlichen Schlüssel des homomorphen Kryptosystems verschlüsselt wurde, entschlüsselt werden, um die durch den öffentlichen Schlüssel verschlüsselten Parameter zu erhalten;
- einen Schritt der Klassifizierung der Daten (250) mittels einer Klassifizierungsfunktion, wobei die Klassifizierungsfunktion mit den Daten und Parametern arbeitet, die durch den öffentlichen Schlüssel verschlüsselt sind, wobei die Klassifizierungsfunktion in dem homomorphen Bereich ausgewertet wird, um ein Klassifizierungsergebnis zu liefern, das durch den öffentlichen Schlüssel verschlüsselt ist.

2. Verfahren zur sicheren Klassifizierung nach Anspruch 1,
**dadurch gekennzeichnet, dass**
vor dem ersten Schritt der Transverschlüsselung der erste symmetrische Schlüssel vom Client mittels des öffentlichen Schlüssels verschlüsselt und dann auf diese Weise verschlüsselt an die Computerplattform übertragen wird, wobei im ersten Schritt der Transverschlüsselung die wiederverschlüsselten Daten in dem homomorphen Bereich mittels des ersten symmetrischen Schlüssels, der mit dem öffentlichen Schlüssel verschlüsselt wurde, entschlüsselt werden.

3. Verfahren zur Klassifizierung nach Anspruch 1 oder 2,
**dadurch gekennzeichnet, dass**
vor dem ersten Schritt der Transverschlüsselung der öffentliche Schlüssel von dem Client an die Computerplattform übertragen wird und dass diese dem Client das mit dem öffentlichen Schlüssel verschlüsselte Ergebnis der Klassifizierung überträgt, wobei der Client dieses Ergebnis mittels des privaten Schlüssels des homomorphen Kryptosystems entschlüsselt, um ein Klassifizierungsergebnis im Klartext zu erhalten.

4. Verfahren zur sicheren Klassifizierung nach Anspruch 3,
**dadurch gekennzeichnet, dass**
der öffentliche Schlüssel von der Computerplattform an den Anbieter übertragen wird und dass vor dem zweiten Schritt der Transverschlüsselung der zweite symmetrische Schlüssel vom Anbieter unter Verwendung des öffentlichen Schlüssels verschlüsselt und dann in verschlüsselter Form an die Computerplattform übertragen wird, wobei im zweiten Schritt der Transverschlüsselung die wiederverschlüsselten Parameter in dem homomorphen Bereich unter Verwendung des zweiten symmetrischen Schlüssels, der durch den öffentlichen Schlüssel verschlüsselt wurde, entschlüsselt werden.

5. Verfahren zur Klassifizierung nach Anspruch 1 oder 2,
**dadurch gekennzeichnet, dass**
vor dem ersten Schritt der Transverschlüsselung der öffentliche Schlüssel vom Anbieter an die Computerplattform übertragen wird und diese dem Anbieter das mit dem öffentlichen Schlüssel verschlüsselte Ergebnis der Klassifizierung überträgt, wobei der Anbieter dieses Ergebnis mit Hilfe des privaten Schlüssels des homomorphen Kryptosystems entschlüsselt, um ein Klassifizierungsergebnis im Klartext zu erhalten.

6. Verfahren zur Klassifizierung nach Anspruch 5,
**dadurch gekennzeichnet, dass**
der öffentliche Schlüssel von der Computerplattform an den Client übertragen wird und dass vor dem ersten Schritt der Transverschlüsselung der erste symmetrische Schlüssel vom Client unter Verwendung des öffentlichen Schlüssels verschlüsselt und auf diese Weise verschlüsselt an die Computerplattform übertragen wird, wobei der erste Schritt der Transverschlüsselung die wiederverschlüsselten Daten in dem homomorphen Bereich unter Verwendung des ersten symmetrischen Schlüssels, der durch den öffentlichen Schlüssel verschlüsselt wurde, entschlüsselt.

7. Verfahren zur Klassifizierung nach einem der vorangehenden Ansprüche, **dadurch gekennzeichnet, dass**
die Klassifizierungsfunktion eine lineare Funktion der zu klassifizierenden Daten ist.

8. Verfahren zur Klassifizierung nach einem der Ansprüche 1 bis 6,
**dadurch gekennzeichnet, dass**
die Klassifizierungsfunktion eine Polynomfunktion der zu klassifizierenden Daten ist.

**Claims**

1. A method for securely classifying data by a computing platform, **characterised in that** it comprises:

- a step of sending (210) data to be classified, from at least one client to said computing platform, the data being sent in an encrypted form by means of a stream encryption using a first symmetric key, associated with the client;
- a step of sending (220) parameters of a classification model, from at least one provider to said computing platform, the parameters being sent in an encrypted form by means of a stream encryption using a second symmetric key, associated with the provider;
- a first transcryption step (230) in which the data encrypted by the first symmetric key are re-encrypted by the public key of a homomorphic cryptosystem, the data thus re-encrypted being decrypted in the homomorphic domain from the first symmetric key encrypted by the public key of the homomorphic cryptosystem, to obtain said data, encrypted by said public key;
- a second transcryption step (240) in which the parameters encrypted by the second symmetric key are re-encrypted by said public key and then decrypted in the homomorphic domain from the second symmetric key encrypted by the public key of the homomorphic cryptosystem, to obtain said parameters, encrypted by said public key;
- a step of classifying the data (250) by means of a classification function, said classification function operating on the data and parameters encrypted by the public key, said classification function being assessed in the homomorphic domain to provide a classification result encrypted by said public key.

2. The secure classifying method according to claim 1, **characterised in that**, prior to the first transcryption step, the first symmetric key is encrypted by the client by means of the public key and then transmitted thus encrypted to the computing platform, the first trans-encryption step decrypting in the homomorphic domain the data re-encrypted, by means of the first symmetric key encrypted by the public key.

3. The classifying method according to claim 1 or 2, **characterised in that**, prior to the first transcryption step, the public key is transmitted by the client to the computing platform and **in that** the latter transmits the classification result encrypted by said public key to the client, the client decrypting this result by means of the private key of said homomorphic cryptosystem to obtain a cleartext classification result.

4. The secure classifying method according to claim 3, **characterised in that** the public key is transmitted by the computing platform to the provider and **in that**, prior to the second transcryption step, the second symmetric key is encrypted by the provider by means of said public key and then transmitted thus encrypted to the computing platform, the second transcryption step decrypting in the homomorphic domain the parameters re-encrypted, by means of the second symmetric key encrypted by the public key.

5. The classifying method according to claim 1 or 2, **characterised in that**, prior to the first transcryption step, the public key is transmitted by the provider to the computing platform and the latter transmits the classification result encrypted by said public key to the provider, the provider decrypting this result by means of the private key of said homomorphic cryptosystem to obtain a cleartext classification result.

6. The classifying method according to claim 5, **characterised in that** the public key is transmitted by the computing platform to the client and **in that**, prior to the first transcryption step, the first symmetric key is encrypted by the client by means of said public key and then transmitted thus encrypted to the computing platform, the first transcryption step decrypting in the homomorphic domain the data re-encrypted, by means of the first symmetric key encrypted by the public key.

7. The classifying method according to one of the previous claims, **characterised in that** the classification function is a linear function of data to be classified.

8. The classifying method according to one of claims 1 to 6, **characterised in that** the classification function is a polynomial function of data to be classified.

FIG.1

EP 3 535 923 B1

$$\text{envoi par } U_i \text{ de } [x_i]_{sk_i^U}$$
$$\text{à la plateforme}$$

210

$$\text{envoi par } F_j \text{ de } [p_j]_{sk_j^F}$$
$$\text{à la plateforme}$$

220

transchiffrement
$$[x_i]_{pk-HE} = dec\left(\left[[x_i]_{sk_i^U}\right]_{pk-HE}, [sk_i^U]_{pk-HE}\right)$$

230

transchiffrement
$$[p_j]_{pk-HE} = dec\left(\left[[p_j]_{sk_j^F}\right]_{pk-HE}, [sk_j^F]_{pk-HE}\right)$$

240

classification
$$[r_{ij}]_{pk-HE} = f\left([x_i]_{pk-HE}, [p_j]_{pk-HE}\right)$$

250

FIG.2

$$[x_i]_{pk_i-HE} = dec\left(\left[[x_i]_{sk_i^U}\right]_{pk_i-HE}, [sk_i^U]_{pk_i-HE}\right)$$

$$[p_j]_{pk_i-HE} = dec\left(\left[[p_j]_{sk_j^F}\right]_{pk_i-HE}, [sk_j^F]_{pk_i-HE}\right)$$

$$[r_{ij}]_{pk_i-HE} = f\left([x_i]_{pk_i-HE}, [p_j]_{pk_i-HE}\right)$$

$[x_i]_{sk_i^U}$

$pk_i - HE$

$[sk_i^U]_{pk_i-HE}$

$[r_{ij}]_{pk-HE}$

$U_i$

$sk_i^U$
$sk_i - HE$
$pk_i - HE$

$[p_j]_{sk_j^F}$

$pk_i - HE$

$[sk_j^F]_{pk_i-HE}$

$F_j$

$sk_j^F$

FIG.3

envoi par $U_i$ de $[x_i]_{sk_i^U}$ à la plateforme — 410

envoi par $U_i$ de $pk_i - HE$ à la plateforme — 411

envoi par $U_i$ de $\left[sk_i^U\right]_{pk_i-HE}$ à la plateforme — 412

transmission par la plateforme à $F_j$ de $pk_i - HE$ — 415

envoi par $F_j$ de $[p_j]_{sk_j^F}$ à la plateforme — 420

envoi par $F_j$ de $\left[sk_j^F\right]_{pk_i-HE}$ à la plateforme — 421

transchiffrement

$$[x_i]_{pk_i-HE} = dec\left(\left[[x_i]_{sk_i^U}\right]_{pk_i-HE}, \left[sk_i^U\right]_{pk_i-HE}\right)$$ — 430

transchiffrement

$$[p_j]_{pk_i-HE} = dec\left(\left[[p_j]_{sk_j^F}\right]_{pk_i-HE}, \left[sk_j^F\right]_{pk_i-HE}\right)$$ — 440

classification

$$[r_{ij}]_{pk_i-HE} = f\left([x_i]_{pk_i-HE}, [p_j]_{pk_i-HE}\right)$$ — 450

transmission par la plateforme à $U_i$ de $[r_{ij}]_{pk_i-HE}$ — 460

déchiffrement par $U_i$ de $[r_{ij}]_{pk_i-HE}$ — 470

FIG.4

FIG.5

$$\text{envoi par } F_j \text{ de } [p_j]_{sk_j^F} \text{ à la plateforme}$$

⟋610

$$\text{envoi par } F_j \text{ de } pk_j - HE \text{ à la plateforme}$$

⟋611

$$\text{envoi par } F_j \text{ de } \left[sk_j^F\right]_{pk_j-HE} \text{ à la plateforme}$$

⟋612

$$\text{transmission par la plateforme à } U_i \text{ de } pk_j{-}HE$$

⟋615

$$\text{envoi par } U_i \text{ de } [x_i]_{sk_i^U} \text{ à la plateforme}$$

⟋620

$$\text{envoi par } U_i \text{ de } \left[sk_i^U\right]_{pk_j-HE} \text{ à la plateforme}$$

⟋621

transchiffrement
$$[x_i]_{pk_j-HE} = dec\left(\left[[x_i]_{sk_i^U}\right]_{pk_j-HE}, \left[sk_i^U\right]_{pk_j-HE}\right)$$

⟋630

transchiffrement
$$[p_j]_{pk_j-HE} = dec\left(\left[[p_j]_{sk_j^F}\right]_{pk_j-HE}, \left[sk_j^F\right]_{pk_j-HE}\right)$$

⟋640

classification
$$[r_{ij}]_{pk_j-HE} = f\left([x_i]_{pk_j-HE}, [p_j]_{pk_j-HE}\right)$$

⟋650

$$\text{transmission par la plateforme à } F_j \text{ de } [r_{ij}]_{pk_j-HE}$$

⟋660

$$\text{déchiffrement par } F_j \text{ de } [r_{ij}]_{pk_j-HE}$$

⟋670

## FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120201378 A1, Nabeel

**Littérature non-brevet citée dans la description**

- **R. BOST et al.** Machine learning classification over encrypted data. *Cryptology Eprint Archive, Report 1014/331,* 2014
- **T. GRAEPEL et al.** ML confidential : machine learning on encrypted data. *Cryptology Eprint Archive, Report 2012/323,* 2012
- **D. OYERINDE et al.** *A Homomorphic Encryption Approach to Implementing Two-Party Privacy Preserving Data Mining*
- **B. MURUGESHWARI ; R. SUJATHA.** *Préservation of Privacy for Multiparty Computation System with Homomorphic Encryption*
- **J. BRICKELL ; V. SHMATIKOV.** *Privacy-Preserving Classifier Learning*
- **A. KHEDR et al.** *SHIELD: Scalable Homomorphic Implementation of Encrypted Data-Classifiers*
- **J. GARAY et al.** Practical and secure solutions for integer comparison. Lecture Notes in Computer Science, 2007, vol. 4450, 330-342
- **N. DOWLIN et al.** *CryptoNets : applying neural networks to encrypted data with high throughput and accuracy,* research.microsoft.com/apps/pubs/default.aspx?id